# EUROPEAN PATENT SPECIFICATION

(11) **EP 4 439 776 B1**
(45) Date of publication and mention of the grant of the patent: **30.09.2026**
(21) Application number: 23868394.0
(22) Date of filing: 09.08.2023
(51) Int. Cl.: H01M 10/42, G01B 5/30, H01M 50/105, G01B 11/245, G01B 11/30, G01B 5/207, G01B 5/28

(54) **POUCH CELL DEFORMATION INSPECTION DEVICE AND DEFORMATION INSPECTION METHOD USING SAME**
VORRICHTUNG ZUR INSPEKTION DER VERFORMUNG VON BEUTELZELLEN UND VERFAHREN ZUR VERFORMUNGSINSPEKTION DAMIT
DISPOSITIF D'INSPECTION DE DÉFORMATION DE CELLULE DE POCHE ET PROCÉDÉ D'INSPECTION DE DÉFORMATION L'UTILISANT

(30) Priority: 21.09.2022 KR 20220119267; 27.07.2023 KR 20230098217
(43) Date of publication of application: 02.10.2024
(73) Proprietor: LG Energy Solution, Ltd., Seoul 07335 (KR)
(72) Inventor: JANG, In Jae, Daejeon 34122 (KR)
(74) Representative: Goddar, Heinz J.
(86) International application number: PCT/KR2023/011714
(87) International publication number: WO 2024/063335

(56) References cited:
- CN-U- 212 871 158
- CN-U- 215 217 474
- JP-A- 2014 165 059
- KR-A- 20210 025 404
- KR-A- 20210 113 753
- KR-B1- 102 114 962

## Description

### [Technical Field]

This application claims the benefit of priority to Korean Patent Application No. 2022-0119267 filed on September 21, 2022 and Korean Patent Application No. 2023-0098217 filed on July 27, 2023.

The present invention relates to a pouch cell deformation testing apparatus and a pouch cell deformation testing method using the same, and more particularly to a pouch cell deformation testing apparatus capable of measuring whether a bending phenomenon has occurred in a pouch cell during an activation process or after the activation process and a pouch cell deformation testing method using the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Based on the structure of an electrode assembly, secondary batteries are classified into a cylindrical secondary battery, a prismatic secondary battery, and a pouch-shaped secondary battery. Thereamong, the pouch-shaped secondary battery is gradually increasing in use because it is possible to obtain high-capacity, high-density secondary batteries, to reduce manufacturing cost, to reduce weight, and to provide various shapes.

The pouch-shaped secondary battery is manufactured by laminating a lower separator, a negative electrode, an upper separator, and a positive electrode in that order, applying heat and pressure thereto through a roll lamination process, and stacking dozens of monocells obtained by cutting. However, a bending phenomenon in which an electrode assembly obtained by lamination is bent in an overall width direction may occur due to various reasons.

In addition, during an activation process of charging, discharging, and stabilizing the pouch-shaped secondary battery, the difference in adhesion between the electrode and the separator in the cell may be generated, whereby the bending phenomenon may occur.

Since bent secondary batteries are at risk of colliding with equipment during transportation to a subsequent process, such as packaging, or ignition due to falling, a series of testing processes to identify deformed secondary batteries is essential.

In connection therewith, Patent Document 1 discloses an apparatus for testing the deformation of a battery container. That is, a pair of pressing plates 2 connected to driven shafts 1 that may be located at opposite side surfaces of a prismatic battery container 10 is provided, and the pressing plates 2 are brought into tight contact with the surface of the battery container 10 to measure the thickness of the deformed battery container 10.

However, in the case of a pouch-shaped battery cell, it is difficult to determine whether the pouch-shaped battery cell has been deformed using the pressing plates because the external shape of the pouch-shaped battery cell is relatively easily changed, and it is impossible to determine which part of the pouch-shaped battery cell has been deformed.

### (Prior Art Document)

(Patent Document 1) Japanese Patent Application Publication No. 2014-165059
CN 212871158 U describes a device for measuring a thickness of an electric core a soft-pack battery cell. Multiple pairs of sensing components are separately arranged on opposite sides of the cell and in abutment to an end face of the corresponding side of the cell. The device is configured to sense a thickness change (or trend) of the battery cell in real time and to avoid potential safety hazards involved in manual thickness measurements.

KR 10 2021 0025404 A also describes a device for measuring a thickness of a unit / battery cell. A single pair of contactless thickness sensors is fixedly arranged on opposite sides of the cell. The thickness of the cell is calculated by subtracting the measured distances between the respective thickness sensor and the corresponding surface of the cell from a total distance between the thickness sensors. While the cell whose thickness is measured passes between the thickness sensors, the distance measurement and the thickness calculation may be repeated a plurality of times. Given different thickness measurements, the cell may be determined to be abnormal.

### [Disclosure]

### [Technical Problem]

The present invention has been made in view of the above problems, and it is an object of the present invention to provide a pouch cell deformation testing apparatus capable of testing deformation of a pouch cell that is easy to change in external shape and a testing method using the same.

It is another object of the present invention to provide a pouch cell deformation testing apparatus capable of checking the deformed position of a pouch cell when the pouch cell is deformed and a testing method using the same.

It is a further object of the present invention to provide a pouch cell deformation testing apparatus capable of checking deformation of a pouch cell that is difficult to check with the naked eye before a degassing process and a testing method using the same.

### [Technical Solution]

A pouch cell deformation testing apparatus according to the present invention to accomplish the above objects includes a die unit (100) configured to allow a pouch cell (S) to be seated thereon in an erected state and a measurement member (200) located above the die unit (100), the measurement member being configured to measure a flatness of the pouch cell (S).

Also, in the pouch cell deformation testing apparatus according to the present invention, the measurement member (200) may be located at a side surface of the pouch cell (S).

Also, in the pouch cell deformation testing apparatus according to the present invention, a plurality of measurement members (200) is provided in an overall length direction of the pouch cell (S).

Also, in the pouch cell deformation testing apparatus according to the present invention, the measurement member (200) includes a hollow receiving portion (210), a moving bar (220) received in the hollow receiving portion (210), a dog (230) mounted to the moving bar (220), a spring (240) received in the hollow receiving portion (210), one end of the spring being fixed to the hollow receiving portion (210), an other end of the spring being connected to one end of the moving bar (220). The measurement member (200) may include a first sensing portion (250) located in a vicinity of the hollow receiving portion (210), wherein the dog (230) may be exposed to the outside through a viewing window (211) of the hollow receiving (210) portion, wherein a contact portion (222) protruding out of the hollow receiving portion (210) may be provided at an other end of the moving bar (220), and wherein the first sensing portion (250) may detect the dog (230) only when the dog is exposed to the outside through the viewing window (211).

Also, in the pouch cell deformation testing apparatus according to the present invention, the contact portion (222) may be made of an elastic material and may be conical in shape.

Also, the pouch cell deformation testing apparatus according to the present invention may further include a driving unit (300) configured to move the hollow receiving portion (210) forwards toward the side surface of the pouch cell (S) or rearwards, wherein the driving unit (300) may include a first fixing bar (310) located vertically and fastened to the measurement member (200), a second fixing bar (320) fastened to one side of the first fixing bar (310) and located parallel to the measurement member (200), a guide rail (330) configured to provide the movement path of the second fixing bar (320), and a linear motion member (340) configured to reciprocate the second fixing bar (320) in a straight line by a set distance.

Also, in the pouch cell deformation testing apparatus according to the present invention, the hollow receiving portion (210) may include a plurality of hollow receiving portions spaced apart from each other by a certain distance in an overall width direction of the pouch cell (S), and the first fixing bar (310) may be fastened to the plurality of hollow receiving portions (210).

Also, in the pouch cell deformation testing apparatus according to the present invention, the hollow receiving portions (210) may be located at a lower edge, at an upper edge, and between the lower edge and the upper edge of the pouch cell (S) in the overall width direction of the pouch cell (S).

Also, in the pouch cell deformation testing apparatus according to the present invention, the hollow receiving portions (210) may be located at one side edge, at an other side edge, and between the one side edge and the other side edge of the pouch cell (S) in the overall length direction.

Also, in the pouch cell deformation testing apparatus according to the present invention, the measurement member (200) may include a hollow receiving portion (210) and a second sensing portion (260) received in the hollow receiving portion (210), and the second sensing portion (260) may be provided with a second sensor (261) configured to measure the distance to the pouch cell (S) in a non-contact manner.

In addition, a pouch cell deformation testing method according to the present invention includes a first step of locating a pouch cell (S) disposed vertically and a second step of determining whether the pouch cell (S) is normal based on a flatness of the pouch cell (S) using a measurement member (200) located at a side surface of the pouch cell, wherein the measurement member (200) measures the flatness of the pouch cell (S) in a contact manner or a non-contact manner.

Also, in the pouch cell deformation testing method according to the present invention, the measurement member (200) includes a hollow receiving portion (210) having a viewing window (211), a moving bar (220) received in the hollow receiving portion (210), a dog (230) mounted to the moving bar (220), a spring (240) received in the hollow receiving portion (210), one end of the spring being fixed to the hollow receiving portion (210), an other end of the spring being connected to one end of the moving bar (220), and a first sensing portion (250) located in a vicinity of the hollow receiving portion (210), and in the second step, the hollow receiving portion (210) is moved toward the side surface of the pouch cell (S) until the hollow receiving portion reaches a set position, in the state in which the hollow receiving portion is located orthogonal to the side surface of the pouch cell (S), when the dog (230) is exposed to the outside through the viewing window (211) and the first sensing portion (250) detects the dog (230), the pouch cell may be determined to be normal, and when the first sensing portion does not detect the dog, the pouch cell may be determined to be abnormal.

Also, in the pouch cell deformation testing method according to the present invention, a plurality of measurement members (200) is provided at one side surface or opposite side surfaces of the pouch cell.

Also, in the pouch cell deformation testing method according to the present invention, in the second step, a plurality of hollow receiving portions (210) spaced apart from each other by a certain distance along an overall length of the pouch cell (S) may be moved to the one side surface or the opposite side surfaces of the pouch cell (S).

Also, in the pouch cell deformation testing method according to the present invention, in the second step, a plurality of hollow receiving portions (210) spaced apart from each other by a certain distance along an overall width of the pouch cell (S) may be moved to the one side surface or the opposite side surfaces of the pouch cell (S).

Also, in the pouch cell deformation testing method according to the present invention, when the dog (230) is not detected in the second step, an alarm may be generated.

### [Advantageous Effects]

As is apparent from the above description, a pouch cell deformation testing apparatus according to the present invention and a pouch cell deformation testing method using the same have an advantage in that it is possible to determine whether a pouch cell has been deformed in a contact manner or a non-contact manner.

In addition, the pouch cell deformation testing apparatus according to the present invention and the pouch cell deformation testing method using the same have an advantage in that a dog movable to one side surface or opposite side surface of the pouch cell and a sensing portion capable of detecting the dog are provided, whereby it is possible to easily determine whether the pouch cell has been deformed.

In addition, the pouch cell deformation testing apparatus according to the present invention and the pouch cell deformation testing method using the same have a merit in that a plurality of dogs movable to one side surface or opposite side surface of the pouch cell and a sensing portion capable of detecting the dogs are provided, whereby it is possible to check the deformed position of the pouch cell.

Furthermore, the pouch cell deformation testing apparatus according to the present invention and the pouch cell deformation testing method using the same have an advantage in that a plurality of dogs movable to one side surface or opposite side surface of the pouch cell is detected, whereby it is possible to measure the degree of deformation of the pouch cell.

### [Description of Drawings]

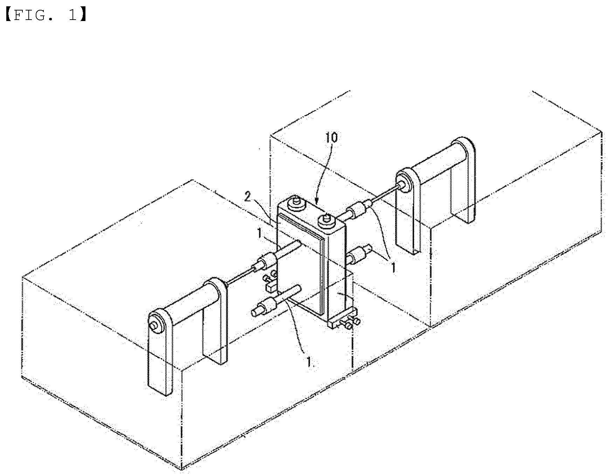

FIG. 1 is a perspective view of a conventional apparatus for testing deformation of a battery container.
FIG. 2 is a view showing the state in which a pouch cell is mounted in a pouch cell deformation testing apparatus according to a first preferred embodiment of the present invention.
FIG. 3 is a schematic view of the pouch cell deformation testing apparatus according to the first preferred embodiment of the present invention.
FIG. 4 is a perspective view of a measurement member provided in the pouch cell deformation testing apparatus according to the first preferred embodiment of the present invention.
FIG. 5 is an exploded perspective view of the measurement member shown in FIG. 4.
FIG. 6 is a perspective view of a modified measurement member provided in the pouch cell deformation testing apparatus according to the first preferred embodiment of the present invention.
FIG. 7 is a perspective view showing the structure in which the measurement member and a driving unit are coupled to each other in the pouch cell deformation testing apparatus according to the first preferred embodiment of the present invention.
FIG. 8 is a schematic view of a pouch cell deformation testing apparatus according to a second embodiment not according to the claimed invention.
FIG. 9 is a perspective view of a measurement member provided in the pouch cell deformation testing apparatus according to the second embodiment not according to the claimed invention.
FIG. 10 is a view illustrating the position of a dog when a normal pouch cell is mounted in the testing apparatus according to the first preferred embodiment of the present invention.
FIG. 11 is a view illustrating the position of the dog when an abnormal pouch cell is mounted in the testing apparatus according to the first preferred embodiment of the present invention.
FIG. 12 is a view illustrating the position of a second sensor when a normal pouch cell is mounted in the testing apparatus according to the second embodiment not according to the claimed invention.
FIG. 13 is a view illustrating the position of the second sensor when an abnormal pouch cell is mounted in the testing apparatus according to the second embodiment not according to the claimed invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch cell deformation testing apparatus according to the present invention and a testing method using the same will be described with reference to the accompanying drawings.

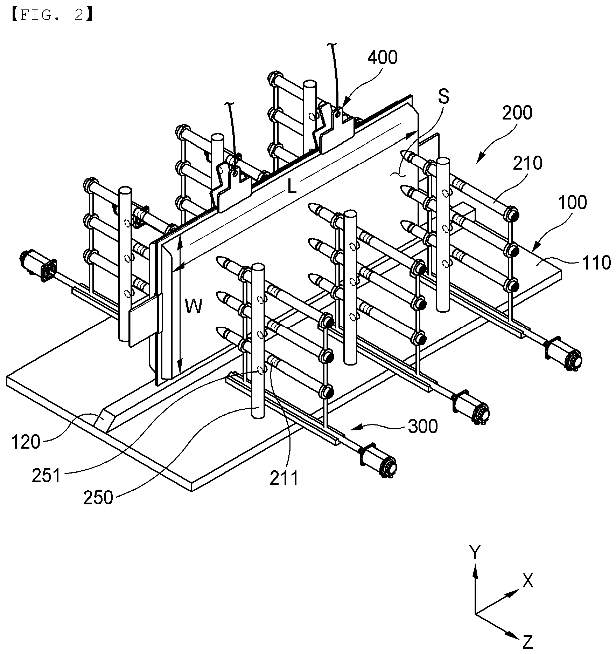

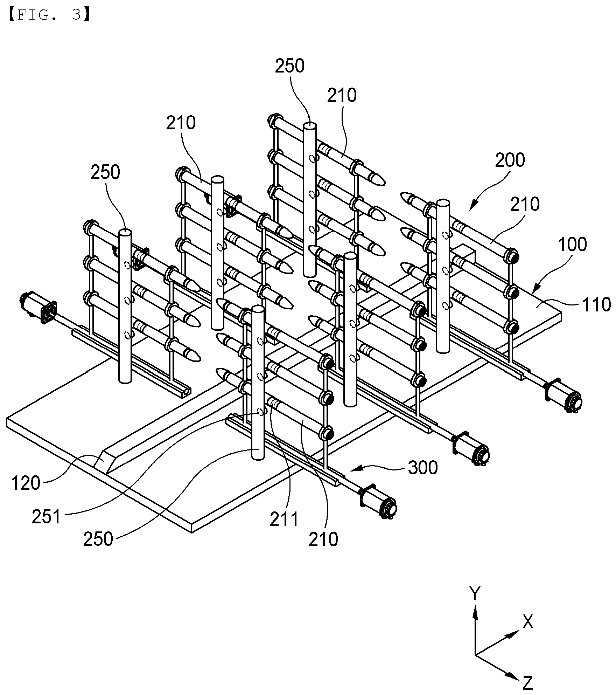

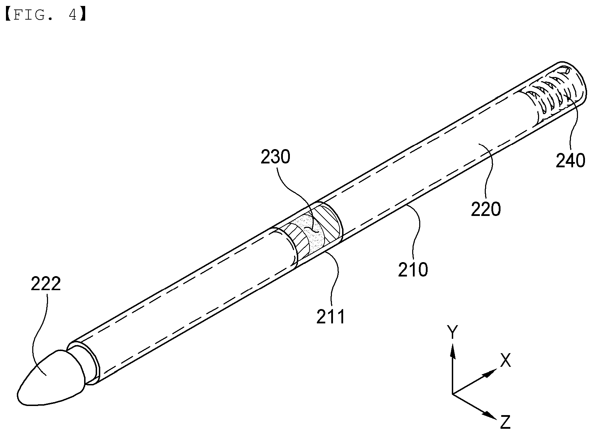

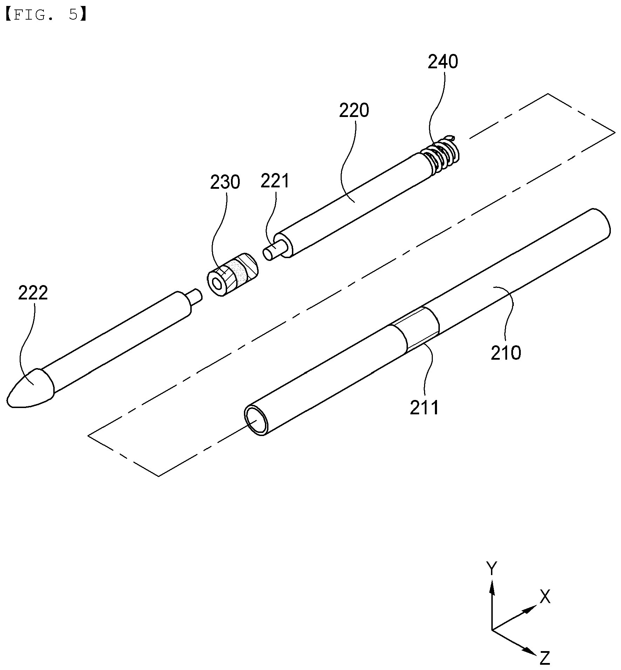

FIG. 2 is a view showing the state in which a pouch cell is mounted in a pouch cell deformation testing apparatus according to a first preferred embodiment of the present invention, FIG. 3 is a schematic view of the pouch cell deformation testing apparatus according to the first preferred embodiment of the present invention, FIG. 4 is a perspective view of a measurement member provided in the pouch cell deformation testing apparatus according to the first preferred embodiment of the present invention, and FIG. 5 is an exploded perspective view of the measurement member shown in FIG. 4.

As shown in FIGs. 2 to 5, the pouch cell deformation testing apparatus according to the first embodiment of the present invention comprises a die unit 100, a measurement member 200, a driving unit 300, and a holding means 400.

First, the die unit 100 may include a plate-shaped base 110 and a seating portion 120. The seating portion 120, which is disposed across the base 110, is configured to indicate the exact seating position of a pouch cell S, which is a target to be tested, and preferably protrudes slightly farther than an upper surface of the base 110.

The measurement member 200 is located at one side surface or opposite side surfaces of the pouch cell S and is configured to physically determine the flatness of the pouch cell S, i.e. whether a bending phenomenon has occurred.

The measurement member 200 includes a cylindrical hollow receiving portion 210, a moving bar 220 received in the hollow receiving portion 210, a dog 230 mounted to the moving bar 220, a spring 240, which is an elastic body, and a first sensing portion 250 located in the vicinity of the hollow receiving portion 210.

First, the hollow receiving portion 210 is configured to guide the moving bar 220 having the dog 230 mounted thereto, and a viewing window 211 configured to allow the position of the dog 230 to be checked therethrough is provided in a predetermined region of the hollow receiving portion 210.

Here, the viewing window 211 may be blocked from the outside by a transparent material, such as glass, or may be simply open.

The moving bar 220 having the dog 230 mounted thereto is movable depending on whether the pouch cell S is flat or not.

Specifically, one end of the moving bar 220, which has a cylindrical shape, is connected to one side of the spring 240, and the other side of the spring 240 is fixed to one side of the hollow receiving portion 210.

In addition, a contact portion 222 located so as to protrude out of the hollow receiving portion 210 is provided at the other end of the moving bar 220. When no external force is applied, therefore, the moving bar 220 is immobile, but when pressed by a curved portion of the pouch cell S, i.e. an outwardly curved portion, the moving bar moves in a direction in which the spring 240 is located, and at this time the dog 230 also moves therewith.

The moving bar 220 may be constituted by two pieces separable from each other, which may be fastened to each other, for example, by male and female engagement; however, the present invention is not limited thereto, and a fastening part therebetween is preferably provided at an extension portion 221 such that attachment and detachment of the dog 230 are easily achieved.

In other words, a bar-shaped extension portion 221 having a reduced outer diameter may be provided at a set position of the moving bar 220, for example in the vicinity of the center thereof at which the pieces constituting the moving bar are connected to each other, and the dog 230 is mounted to the extension portion 221.

The contact portion 222 is preferably approximately conical in shape, and is more preferably made of an elastic material, such as rubber or silicone, in order to prevent damage to the pouch cell S. Of course, the structure of the contact portion may be variously changed as long as the pouch cell S is not damaged. For example, the contact portion may be a spring or may be configured in a form in which an outer surface of the spring is enclosed by rubber.

Next, the dog 230 will be described. As previously described, the dog 230 is doughnut-shaped, is mounted to the extension portion 221 of the moving bar 220, and is located so as to be exposed through the viewing window 211 in the state in which the contact portion 222 of the moving bar 220 and the pouch cell S are not in contact.

The dog 230 may be detected by the first sensing portion 250. Specifically, the first sensing portion 250 is located orthogonal to the hollow receiving portion 210, and a first sensor 251 capable of recognizing the dog 230 is provided at the position of the dog that faces the viewing window 211.

Consequently, the first sensor 251 can detect the dog 230 only through the viewing window 211 of the hollow receiving portion 210, and cannot detect the dog 230 when the dog moves to the left and right of the viewing window 211.

For example, a coating layer made of colored ink is formed on an outer surface of the dog 230, and the first sensor 251 may be a color sensor capable of detecting the coating layer of the dog 230. In particular, when the ink forming the coating layer on the outer surface of the dog 230 is formed in the shape of a band formed at a certain interval and a plurality of coating layers having different colors is provided, it is possible to detect the movement distance of the dog 230 through color change.

Of course, the dog 230 and the first sensor 251 are not limited to the above example as long as the dog 230 is detectable.

After an activation process, a bending phenomenon may occur along the overall width W of the pouch cell S, i.e. the surface thereof along which electrode leads are provided. Consequently, it is preferable for a plurality of hollow receiving portions 210 to be located so as to be spaced apart from each other by a certain distance along the overall width of the pouch cell S, and it is more preferable for the hollow receiving portions 210 to be located at a lower edge, at an upper edge, and between the lower edge and the upper edge of the pouch cell S.

When the hollow receiving portions 210 are located, as described above, it is possible to determine whether the bending phenomenon has occurred in a certain region of the overall width W.

In particular, when the hollow receiving portions 210 are located at one side edge, at the other side edge, and between the one side edge and the other side edge of the pouch cell S along the overall length L thereof, it is possible to determine whether the bending phenomenon has occurred in almost the entire region of the pouch cell S.

Meanwhile, it is preferable for the measurement members 200 to be located at opposite side surfaces of the pouch cell S so as to correspond to each other, rather than only at one side surface of the pouch cell S. The reason for this is that, even when any one of the measurement members 200 malfunctions, it is possible to increase the accuracy of the test results.

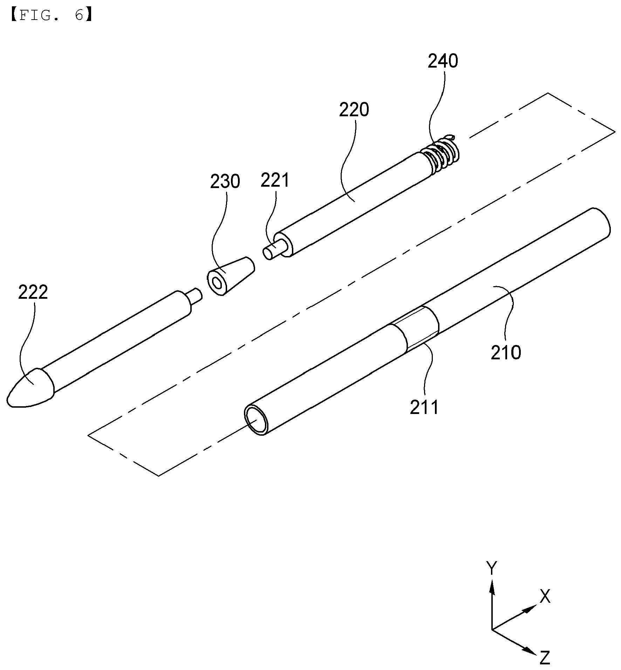

FIG. 6 is a perspective view of a modified measurement member provided in the pouch cell deformation testing apparatus according to the first preferred embodiment of the present invention. It is also possible to use the modified measurement member, as shown in FIG. 6.

That is, in the modified measurement member, a dog 230 having an approximately conical shape with the maximum outer diameter smaller than the outer diameter of a moving bar 220 is provided on an extension portion 221 of the moving bar 220, and a first sensor mounted to a first sensing portion is a proximity displacement sensor, such as a laser sensor, an ultrasonic sensor, or an infrared sensor. When the modified measurement member is used, it is not only possible to determine whether a dog 230 is located in a viewing window 211 but also possible to check the movement distance of the dog 230 due to the conical shape thereof.

Referring back to FIGs. 2 to 5, the first sensor 251 is mounted to the first sensing portion 250. In order to detect all dogs 230, it is preferable to provide the same number of first sensors 251 as the viewing windows 211 of the hollow receiving portions 210, and it is more preferable for the first sensors to be located on the same horizontal lines as the viewing windows 211.

Although the first sensing portion 250 is shown as being located at the base 110 in the figures, the present invention is not limited thereto.

Meanwhile, the holding means 400 is configured to move and temporarily hold a pouch cell S to be tested, and is not particularly restricted as long as the holding means does not cause damage to the pouch cell S. As an example, the holding means may be tongs or a vacuum suction plate.

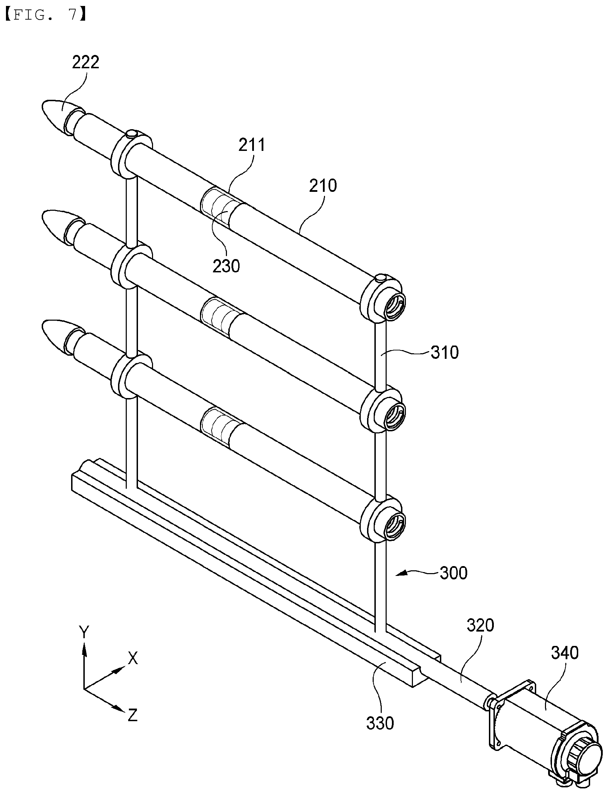

FIG. 7 is a perspective view showing the structure in which the hollow receiving portion and the driving unit are coupled to each other in the pouch cell deformation testing apparatus according to the first preferred embodiment of the present invention.

In order to check the bending phenomenon of the pouch cell S, the hollow receiving portion 210 must be located orthogonal to the side surface of the pouch cell S. Preferably, a plurality of hollow receiving portions 210 is used to check bent parts.

The driving unit 300 is configured to move the hollow receiving portion 210 in a direction orthogonal to the side surface of the pouch cell S and to connect a plurality of hollow receiving portions 210 to each other.

Specifically, the driving unit 300 includes a first fixing bar 310 fastened to the hollow receiving portion 210, a second fixing bar 320 fastened to one side of the first fixing bar 310, a guide rail 330 configured to provide the movement path of the second fixing bar 320, and a linear motion member 340.

The first fixing bar 310 is configured to fix and support the plurality of hollow receiving portions 210 disposed in the overall width direction of the pouch cell S, and is erected in a direction orthogonal to the hollow receiving portion 210, i.e. vertically. Here, a fastening method or means is not particularly limited as long as the first fixing bar 310 and the hollow receiving portion 210 can be fastened to each other. Although two first fixing bars 310 are shown in the figures, which is only an example, and the number of the first fixing bars may be changed.

The second fixing bar 320 is configured to fix and support the vertically erected first fixing bar 310, and is located parallel to the hollow receiving portion 210. A method of fastening therebetween is not particularly limited. Although the first fixing bar 310 and the second fixing bar 320 have been described separately, these fixing bars may be integrated into a single body.

The guide rail 330 is configured to guide the second fixing bar 320 so as to accurately move in a direction orthogonal to the side surface of the pouch cell S, and may have a recessed groove formed in a longitudinal direction thereof.

The linear motion member 340 connected to one side of the second fixing bar 320 is configured to reciprocate the second fixing bar 320 in a straight line, and is not particularly limited as long as it is possible to linearly move the second fixing bar 320 by a predetermined distance. Preferably, the linear motion member is a servomotor or a pneumatic cylinder.

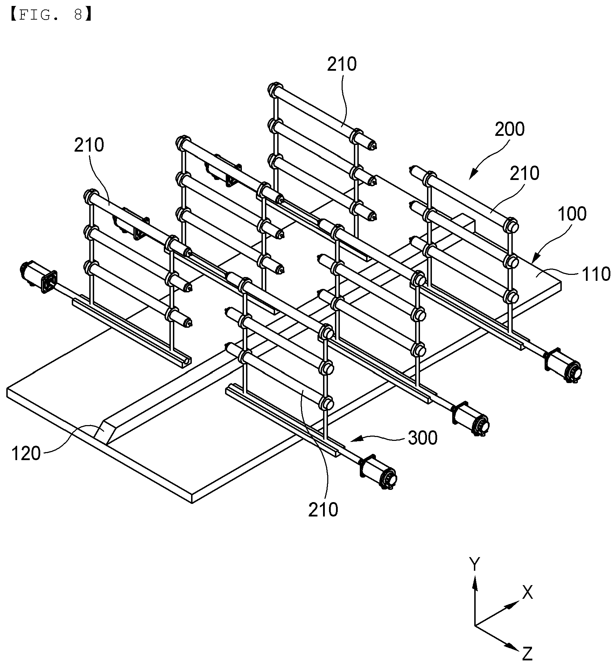

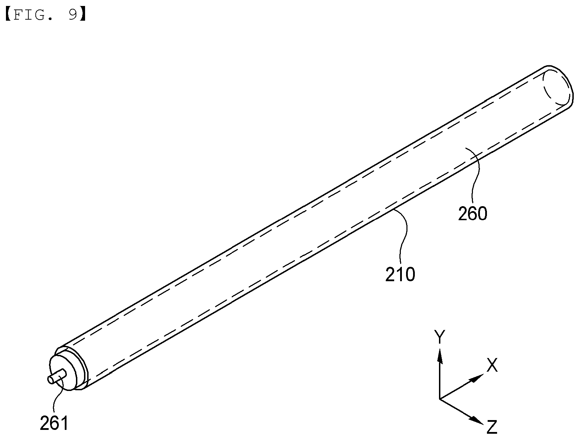

FIG. 8 is a schematic view of a pouch cell deformation testing apparatus according to a second embodiment not according to the claimed invention, and FIG. 9 is a perspective view of a measurement member provided in the pouch cell deformation testing apparatus according to the embodiment not according to the claimed invention.

The testing apparatus according to the second embodiment not according to the claimed invention is identical to the first embodiment except for a measurement member 200. In other words, the measurement member of the second embodiment includes a hollow receiving portion 210 and a second sensing portion 260 received in the hollow receiving portion 210, wherein a second sensor 261 capable of measuring the distance to the pouch cell S in a non-contact manner is mounted to the second sensing portion 260, and the second sensor is a proximity displacement sensor, such as a laser sensor, an ultrasonic sensor, or an infrared sensor.

Next, a pouch cell deformation testing method using the testing apparatus according to the first preferred embodiment of the present invention described above will be described.

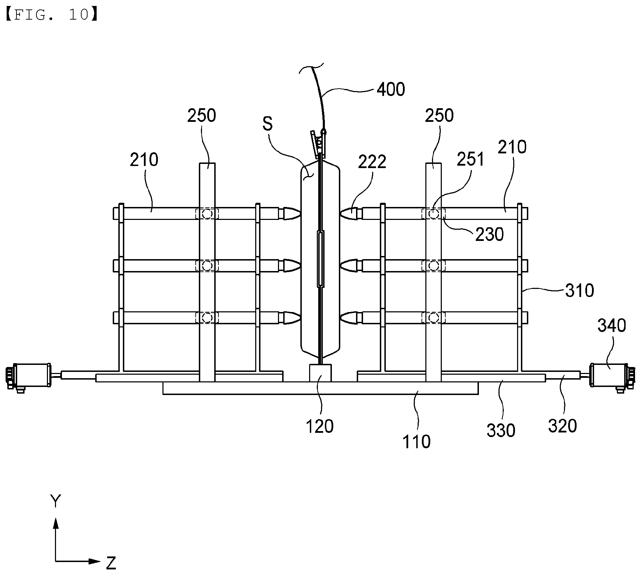

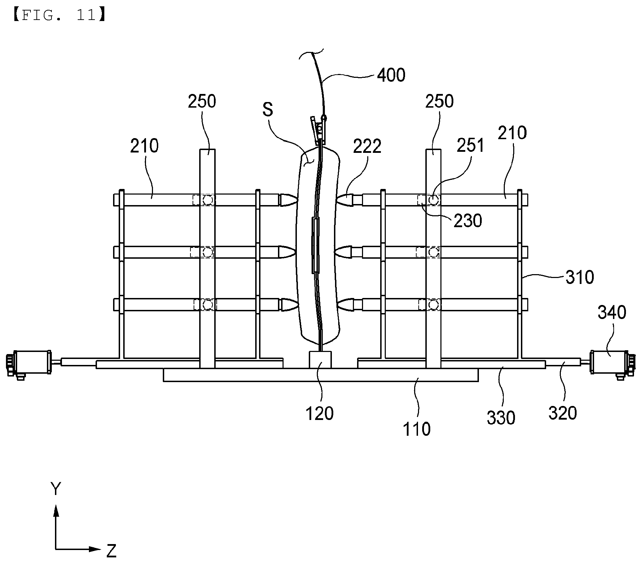

FIG. 10 is a view illustrating the position of the dog when a normal pouch cell is mounted in the testing apparatus according to the first preferred embodiment of the present invention, and FIG. 11 is a view illustrating the position of the dog when an abnormal pouch cell is mounted in the testing apparatus according to the first preferred embodiment of the present invention.

Referring to these figures, a method of testing deformation of a pouch cell S according to the present invention includes a first step of locating the pouch cell S vertically, and a second step of determining whether the pouch cell S is normal based on the flatness of the pouch cell S using the measurement member 200 located at the side surface of the pouch cell S.

First, in the first step, the pouch cell S is located perpendicular to the ground or the base and fixed using the holding means 400. Of course, the overall length of the pouch cell S is parallel to the base in order to prevent electrode leads from colliding with the base.

In the second step, the receiving portion 210 is moved toward the side surface of the pouch cell S until the hollow receiving portion reaches a set position, more specifically until the hollow receiving portion comes into tight contact with or comes close to the pouch cell S, in the state in which the hollow receiving portion is located orthogonal to the side surface of the pouch cell S. At this time, it is obvious that the distance between the measurement member 200 and the pouch cell S must be measured in advance.

The linear motion member 340 moves the plurality of hollow receiving portions 210 spaced apart from each other by a certain distance along the overall length and overall width of the pouch cell S, preferably toward one side surface of the pouch cell S, more preferably toward opposite side surfaces of the pouch cell S, and most preferably moves all of the hollow receiving portions 210 by the same distance.

Whether the pouch cell S is normal is determined based on the position of the dog 230. As shown in FIG. 10, when the pouch cell S is normal, i.e. there is no bending phenomenon, the contact portions 222 of the hollow receiving portions 210 that have been moved from opposite sides of the pouch cell S are simply in contact or very close to the side surfaces of the pouch cell S. As a result, all of the dogs 230 are exposed through the viewing windows 211 and may be detected by the first sensors 251.

On the other hand, when the pouch cell S is abnormal, i.e. a bending phenomenon has occurred at a part of the pouch cell, as shown in FIG. 11, some of the contact portions 222 of the hollow receiving portions 210 that have been moved from opposite sides of the pouch cell S cannot be moved to set positions.

In other words, the portion of the pouch cell that is bent in a direction in which the hollow receiving portion 210 approaches pushes the contact portion 222 received in the hollow receiving portion 210, whereby the dog 230 cannot be located in the viewing window 211 and thus cannot be detected by the first sensor 251, or even though the dog 230 is located in the viewing window 211, the dog is moved beyond a set range, whereby only a part of the dog 230 is located in the viewing window.

As described above, when all of the dogs 230 are detected, the pouch cell S is determined to be normal with no bending phenomenon, and when some of the dogs 230 are not detected, or the dogs 230 are moved beyond the set range even though the dogs are detected, the pouch cell S is determined to be abnormal.

When the pouch cell S is determined to be abnormal, it is preferable to further include a step of generating an alarm, such as a sound, for easy recognition by a worker.

Meanwhile, when a measurement member 200 having a dog 230 having a conical shape with the configuration shown in FIG. 6 is used, it is possible to determine whether the pouch cell S is defective by measuring the distance between the dog 230 and the first sensor 251.

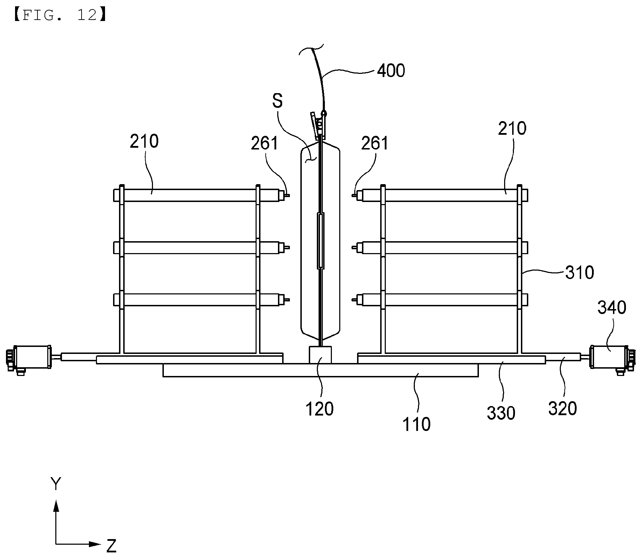

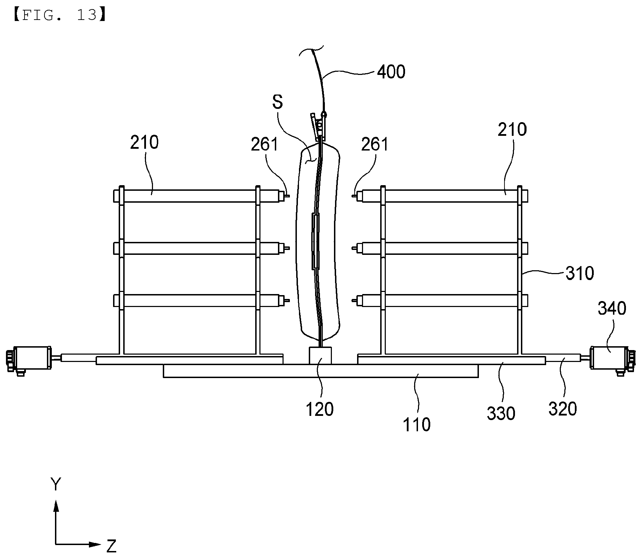

FIG. 12 is a view illustrating the position of a second sensor when a normal pouch cell is mounted in the testing apparatus according to the second embodiment not according to the claimed invention, and FIG. 13 is a view illustrating the position of the second sensor when an abnormal pouch cell is mounted in the testing apparatus according to the second embodiment not according to the claimed invention.

When the testing apparatus according to the second embodiment is used, the second sensor 261 is located so as to be spaced apart from the pouch cell S by a certain distance, and then the distance between the pouch cell S and the second sensor 261 is measured. When all of the measured results are within a set range, the pouch cell is determined to be normal, and when one or more results deviate from the set range, the pouch cell is determined to be defective.

Compared to the testing apparatus according to the first embodiment, the testing apparatus according to the second embodiment has the advantage that the testing apparatus does not need to be moved until the testing apparatus comes into tight contact with or comes close to the pouch cell S.

The present invention has been described above with reference to specific embodiments. However, those skilled in the art to which the present invention pertains will appreciate that various applications and modifications are possible within the category of the present invention based on the above description. The scope of the invention is defined by the claims.

### (Description of Reference Symbols)

- 100:: Die unit
- 110:: Base
- 120:: Seating portion
- 200:: Measurement member
- 210:: Receiving portion 211: Viewing window
- 220:: Moving bar
- 221:: Extension portion 222: Contact portion
- 230:: Dog
- 240:: Spring
- 250:: First sensing portion 251: First sensor
- 260:: Second sensing portion 261: Second sensor
- 300:: Driving unit
- 310:: First fixing bar
- 320:: Second fixing bar
- 330:: Guide rail
- 340:: Linear motion member
- 400:: Holding means
- S:: Pouch cell
- L:: Overall length
- W:: Overall width

## Claims

1. A pouch cell deformation testing apparatus comprising:
a die unit (100) configured to allow a pouch cell (S) to be seated thereon in an erected state; and
a measurement member (200) located above the die unit (100), the measurement member (200) being configured to measure a flatness of the pouch cell (S) in a contact manner; wherein a plurality of measurement members (200) are provided in an overall length direction (X) of the pouch cell (S), wherein the deformation is a bending phenomenon, wherein the measurement members (200) each comprise:
a hollow receiving portion (210),
a moving bar (220) received in the hollow receiving portion (210),
a dog (230) mounted to the moving bar (220),
a spring (240) received in the hollow receiving portion (210), and
one end of the spring (240) being fixed to the receiving portion (210), another end of the spring (240) being connected to one end of the moving bar (220), and
a first sensing portion (250) located in a vicinity of the hollow receiving portion(210) capable of detecting the dog (230) to determine whether the pouch cell (s) has been deformed.

2. The pouch cell deformation testing apparatus according to claim 1, wherein the measurement member (200) is located at a side surface of the pouch cell (S).

3. The pouch cell deformation testing apparatus according to claim 1, wherein
the hollow receiving portion (210) has a viewing window (211),
wherein the dog (230) is exposed to an outside through the viewing window (211),
wherein a contact portion (222) protruding out of the hollow receiving portion (210) is provided at another end of the moving bar (220), and
wherein the first sensing portion (250) detects the dog (230) only when the dog (230) is exposed to the outside through the viewing window (211).

4. The pouch cell deformation testing apparatus according to claim 3, wherein the contact portion (222) is made of an elastic material and is conical in shape.

5. The pouch cell deformation testing apparatus according to claim 3, further comprising:
a driving unit (300) configured to move the hollow receiving portion (210) forwards toward the side surface of the pouch cell (S) or rearwards,
wherein the driving unit (300) comprises:
a first fixing bar (310) located vertically and fastened to the measurement member (200),
a second fixing bar (320) fastened to one side of the first fixing bar (310) and located parallel to the measurement member (200),
a guide rail (330) configured to provide a movement path of the second fixing bar (320), and
a linear motion member (340) configured to reciprocate the second fixing bar (320) in a straight line by a set distance.

6. The pouch cell deformation testing apparatus according to claim 5, wherein the hollow receiving portion (210) comprises a plurality of hollow receiving portions (210) spaced apart from each other by a certain distance in an overall width direction (Z) of the pouch cell (S), and
wherein the first fixing bar (310) is fastened to the plurality of hollow receiving portions (210).

7. The pouch cell deformation testing apparatus according to claim 6, wherein the hollow receiving portions (210) are located at a lower edge, at an upper edge, and between the lower edge and the upper edge of the pouch cell (S) in the overall width direction (Z) of the pouch cell (S).

8. The pouch cell deformation testing apparatus according to claim 6, wherein the hollow receiving portions (210) are located at one side edge, at an other side edge, and between the one side edge and the other side edge of the pouch cell (S) in the overall length direction (X).

9. The pouch cell deformation testing apparatus according to claim 1, wherein the measurement member (200) comprises:
a hollow receiving portion (210), and
a second sensing portion (260) received in the hollow receiving portion (210),
wherein the second sensing portion (260) is provided with a second sensor (261) configured to measure a distance to the pouch cell (S) in a non-contact manner.

10. A pouch cell deformation testing method comprising:
a first step of locating a pouch cell (S) disposed vertically; and
a second step of determining whether the pouch cell (S) is normal based on a flatness of the pouch cell (S) using a measurement member (200) located at a side surface of the pouch cell (S),
wherein the measurement member (200) measures the flatness of the pouch cell (S) in a contact manner, and
wherein a plurality of measurement members (200) are provided at one side surface or opposite side surfaces of the pouch cell (S), and
wherein the deformation is a bending phenomenon, wherein the measurement members (200) each comprise:
a hollow receiving portion (210),
a moving bar (220) received in the hollow receiving portion (210),
a dog (230) mounted to the moving bar (220),
a spring (240) received in the hollow receiving portion (210), one end of the spring (240) being fixed to the hollow receiving portion (210), another end of the spring (240) being connected to one end of the moving bar (220), and
a first sensing portion (250) located in a vicinity of the hollow receiving portion (210),
wherein in the second step, the hollow receiving portion (210) is moved toward the side surface of the pouch cell (S) until the hollow receiving portion (210) reaches a set position, in a state in which the hollow receiving portion (210) is located orthogonal to the side surface of the pouch cell (S), and
wherein the first sensing portion detects the dog to determine whether the pouch cell has been deformed.

11. The pouch cell deformation testing method according to claim 10, wherein the hollow receiving portion (210) has a viewing window (211),
wherein when the dog (230) is exposed to an outside through the viewing window (211) and the first sensing portion (250) detects the dog (230), the pouch cell (S) is determined to be normal, and when the first sensing portion (250) does not detect the dog (230), the pouch cell (S) is determined to be abnormal.

12. The pouch cell deformation testing method according to claim 10, wherein, in the second step, a plurality of hollow receiving portions (210) spaced apart from each other by a certain distance along an overall length (L) of the pouch cell (S) are moved to the one side surface or the opposite side surfaces of the pouch cell (S).

13. The pouch cell deformation testing method according to claim 10, wherein, in the second step, a plurality of hollow receiving portions (210) spaced apart from each other by a certain distance along an overall width (W) of the pouch cell (S) are moved to the one side surface or the opposite side surfaces of the pouch cell (S).

14. The pouch cell deformation testing method according to claim 11, wherein, when the dog (230) is not detected in the second step, an alarm is generated.

## Patentansprüche

1. Vorrichtung zur Prüfung einer Verformung einer Pouch-Zelle, umfassend:
eine Aufnahmeeinheit (100), die dazu eingerichtet ist, zu ermöglichen, dass eine Pouch-Zelle (S) in einem aufgerichteten Zustand darauf angeordnet wird; und
ein Messelement (200), das oberhalb der Aufnahmeeinheit (100) angeordnet ist, wobei das Messelement (200) dazu eingerichtet ist, eine Ebenheit der Pouch-Zelle (S) auf kontaktierende Weise zu messen; wobei eine Mehrzahl von Messelementen (200) in einer Gesamtlängsrichtung (X) der Pouch-Zelle (S) vorgesehen ist, wobei die Verformung ein Biegephänomen ist, wobei die Messelemente (200) jeweils umfassen:
einen hohlen Aufnahmeabschnitt (210),
eine Bewegungsstange (220), die in dem hohlen Aufnahmeabschnitt (210) aufgenommen ist,
einen Mitnehmer (230), der an der Bewegungsstange (220) angebracht ist,
eine Feder (240), die in dem hohlen Aufnahmeabschnitt (210) aufgenommen ist,
wobei ein Ende der Feder (240) an dem Aufnahmeabschnitt (210) befestigt ist und ein anderes Ende der Feder (240) mit einem Ende der Bewegungsstange (220) verbunden ist, und einen ersten Erfassungsabschnitt (250), der in einer Umgebung des hohlen Aufnahmeabschnitts (210) angeordnet ist und dazu in der Lage ist, den Mitnehmer (230) zu erfassen, um zu bestimmen, ob die Pouch-Zelle (S) verformt wurde.

2. Vorrichtung zur Prüfung einer Verformung einer Pouch-Zelle nach Anspruch 1, wobei das Messelement (200) an einer Seitenfläche der Pouch-Zelle (S) angeordnet ist.

3. Vorrichtung zur Prüfung einer Verformung einer Pouch-Zelle nach Anspruch 1, wobei der hohle Aufnahmeabschnitt (210) ein Sichtfenster (211) aufweist,
wobei der Mitnehmer (230) durch das Sichtfenster (211) nach außen freiliegt,
wobei an einem anderen Ende der Bewegungsstange (220) ein Kontaktabschnitt (222) vorgesehen ist, der aus dem hohlen Aufnahmeabschnitt (210) herausragt, und
wobei der erste Erfassungsabschnitt (250) den Mitnehmer (230) nur dann erfasst, wenn der Mitnehmer (230) durch das Sichtfenster (211) nach außen freiliegt.

4. Vorrichtung zur Prüfung einer Verformung einer Pouch-Zelle nach Anspruch 3, wobei der Kontaktabschnitt (222) aus einem elastischen Material hergestellt ist und eine konische Form aufweist.

5. Vorrichtung zur Prüfung einer Verformung einer Pouch-Zelle nach Anspruch 3, ferner umfassend:
eine Antriebseinheit (300), die dazu eingerichtet ist, den hohlen Aufnahmeabschnitt (210) vorwärts in Richtung der Seitenfläche der Pouch-Zelle (S) oder rückwärts zu bewegen,
wobei die Antriebseinheit (300) umfasst:
eine erste Befestigungsstange (310), die vertikal angeordnet und an dem Messelement (200) befestigt ist,
eine zweite Befestigungsstange (320), die an einer Seite der ersten Befestigungsstange (310) befestigt ist und parallel zu dem Messelement (200) angeordnet ist,
eine Führungsschiene (330), die dazu eingerichtet ist, einen Bewegungsweg der zweiten Befestigungsstange (320) bereitzustellen, und
ein Linearbewegungselement (340), das dazu eingerichtet ist, die zweite Befestigungsstange (320) um eine festgelegte Strecke in einer geraden Linie hin und her zu bewegen.

6. Vorrichtung zur Prüfung einer Verformung einer Pouch-Zelle nach Anspruch 5, wobei der hohle Aufnahmeabschnitt (210) eine Mehrzahl von hohlen Aufnahmeabschnitten (210) umfasst, die in einer Gesamtbreitenrichtung (Z) der Pouch-Zelle (S) in einem bestimmten Abstand voneinander beabstandet sind, und
wobei die erste Befestigungsstange (310) an der Mehrzahl von hohlen Aufnahmeabschnitten (210) befestigt ist.

7. Vorrichtung zur Prüfung einer Verformung einer Pouch-Zelle nach Anspruch 6, wobei die hohlen Aufnahmeabschnitte (210) in der Gesamtbreitenrichtung (Z) der Pouch-Zelle (S) an einem unteren Rand, an einem oberen Rand und zwischen dem unteren Rand und dem oberen Rand der Pouch-Zelle (S) angeordnet sind.

8. Vorrichtung zur Prüfung einer Verformung einer Pouch-Zelle nach Anspruch 6, wobei die hohlen Aufnahmeabschnitte (210) in der Gesamtlängsrichtung (X) an einem Seitenrand, an einem anderen Seitenrand und zwischen dem einen Seitenrand und dem anderen Seitenrand der Pouch-Zelle (S) angeordnet sind.

9. Vorrichtung zur Prüfung einer Verformung einer Pouch-Zelle nach Anspruch 1, wobei das Messelement (200) umfasst:
einen hohlen Aufnahmeabschnitt (210), und
einen zweiten Erfassungsabschnitt (260), der in dem hohlen Aufnahmeabschnitt (210) aufgenommen ist,
wobei der zweite Erfassungsabschnitt (260) mit einem zweiten Sensor (261) versehen ist, der dazu eingerichtet ist, einen Abstand zu der Pouch-Zelle (S) auf berührungslose Weise zu messen.

10. Verfahren zur Prüfung einer Verformung einer Pouch-Zelle, umfassend:
einen ersten Schritt des Anordnens einer vertikal angeordneten Pouch-Zelle (S); und
einen zweiten Schritt des Bestimmens, ob die Pouch-Zelle (S) in Ordnung ist, auf Grundlage einer Ebenheit der Pouch-Zelle (S) unter Verwendung eines Messelements (200), das an einer Seitenfläche der Pouch-Zelle (S) angeordnet ist,
wobei das Messelement (200) die Ebenheit der Pouch-Zelle (S) auf kontaktierende Weise misst, und
wobei eine Mehrzahl von Messelementen (200) an einer Seitenfläche oder an einander gegenüberliegenden Seitenflächen der Pouch-Zelle (S) vorgesehen ist, und
wobei die Verformung ein Biegephänomen ist, wobei die Messelemente (200) jeweils umfassen:
einen hohlen Aufnahmeabschnitt (210),
eine Bewegungsstange (220), die in dem hohlen Aufnahmeabschnitt (210) aufgenommen ist,
einen Mitnehmer (230), der an der Bewegungsstange (220) angebracht ist,
eine Feder (240), die in dem hohlen Aufnahmeabschnitt (210) aufgenommen ist, wobei ein Ende der Feder (240) an dem hohlen Aufnahmeabschnitt (210) befestigt ist und ein anderes Ende der Feder (240) mit einem Ende der Bewegungsstange (220) verbunden ist, und
einen ersten Erfassungsabschnitt (250), der in einer Umgebung des hohlen Aufnahmeabschnitts (210) angeordnet ist,
wobei in dem zweiten Schritt der hohle Aufnahmeabschnitt (210) in Richtung der Seitenfläche der Pouch-Zelle (S) bewegt wird, bis der hohle Aufnahmeabschnitt (210) eine festgelegte Position erreicht, in einem Zustand, in dem der hohle Aufnahmeabschnitt (210) orthogonal zu der Seitenfläche der Pouch-Zelle (S) angeordnet ist, und
wobei der erste Erfassungsabschnitt den Mitnehmer erfasst, um zu bestimmen, ob die Pouch-Zelle verformt wurde.

11. Verfahren zur Prüfung einer Verformung einer Pouch-Zelle nach Anspruch 10, wobei der hohle Aufnahmeabschnitt (210) ein Sichtfenster (211) aufweist,
wobei, wenn der Mitnehmer (230) durch das Sichtfenster (211) nach außen freiliegt und der erste Erfassungsabschnitt (250) den Mitnehmer (230) erfasst, bestimmt wird, dass die Pouch-Zelle (S) in Ordnung ist, und wenn der erste Erfassungsabschnitt (250) den Mitnehmer (230) nicht erfasst, bestimmt wird, dass die Pouch-Zelle (S) fehlerhaft ist.

12. Verfahren zur Prüfung einer Verformung einer Pouch-Zelle nach Anspruch 10, wobei in dem zweiten Schritt eine Mehrzahl von hohlen Aufnahmeabschnitten (210), die entlang einer Gesamtlänge (L) der Pouch-Zelle (S) in einem bestimmten Abstand voneinander beabstandet sind, zu der einen Seitenfläche oder zu den einander gegenüberliegenden Seitenflächen der Pouch-Zelle (S) bewegt wird.

13. Verfahren zur Prüfung einer Verformung einer Pouch-Zelle nach Anspruch 10, wobei in dem zweiten Schritt eine Mehrzahl von hohlen Aufnahmeabschnitten (210), die entlang einer Gesamtbreite (W) der Pouch-Zelle (S) in einem bestimmten Abstand voneinander beabstandet sind, zu der einen Seitenfläche oder zu den einander gegenüberliegenden Seitenflächen der Pouch-Zelle (S) bewegt wird.

14. Verfahren zur Prüfung einer Verformung einer Pouch-Zelle nach Anspruch 11, wobei, wenn der Mitnehmer (230) in dem zweiten Schritt nicht erfasst wird, ein Alarm erzeugt wird.

## Revendications

1. Appareil d'essai de déformation de cellules pouch comprenant :
une unité de matrice (100) configurée pour permettre d'installer sur celle-ci une cellule pouch (S) à l'état monté ; et
un élément de mesure (200) situé au-dessus de l'unité de matrice (100), l'élément de mesure (200) étant configuré pour mesurer par contact la planéité de la cellule pouch (S) ;
une pluralité d'éléments de mesure (200) étant agencés dans le sens général de la longueur (X) de la cellule pouch (S), la déformation étant un phénomène de flexion, les éléments de mesure (200) comprenant chacun :
une partie réceptrice creuse (210),
une barre mobile (220) reçue dans la partie réceptrice creuse (210),
un crabot (230) monté sur la barre mobile (220),
un ressort (240) introduit dans la partie réceptrice creuse (210), et
un bout du ressort (240) fixé sur la partie réceptrice (210), un autre bout du ressort (240) étant relié à un bout de la barre mobile (220), et
une première partie de détection (250) située à proximité de la partie réceptrice creuse (210) en mesure de détecter le crabot (230) pour déterminer si les cellules pouch (S) ont été déformées.

2. Appareil d'essai de déformation de cellules pouch selon la revendication 1, l'élément de mesure (200) étant situé sur une surface latérale de la cellule pouch (S).

3. Appareil d'essai de déformation de cellules pouch selon la revendication 1,
la partie réceptrice creuse (210) possédant une fenêtre d'observation (211),
le crabot (230) étant exposé à l'extérieur à travers la fenêtre d'observation (211),
une partie de contact (222) faisant saillie de la partie réceptrice creuse (210) étant agencée sur un autre bout de la barre mobile (220), et
la première partie de détection (250) ne détectant le crabot (230) que lorsque le crabot (230) est exposé à l'extérieur à travers la fenêtre d'observation (211).

4. Appareil d'essai de déformation de cellules pouch selon la revendication 3, la partie de contact (222) étant réalisée avec un matériau élastique, et ayant une forme conique.

5. Appareil d'essai de déformation de cellules pouch selon la revendication 3, comprenant en outre:
un dispositif d'entraînement (300) configuré pour déplacer la partie réceptrice creuse (210) en avant vers la surface latérale de la cellule pouch (S), ou en arrière,
le dispositif d'entraînement (300) comprenant :
une première barre de fixation (310) positionnée verticalement et fixée à l'élément de mesure (200),
une deuxième barre de fixation (320) fixée sur un côté de la première barre de fixation (310) et positionnée parallèlement à l'élément de mesure (200),
une glissière de guidage (330) configurée pour agencer un chemin de déplacement de la deuxième barre de fixation (320), et
un élément de déplacement linéaire (340) configuré pour un déplacement alternatif de la deuxième barre de fixation (320) sur une distance définie dans une ligne droite.

6. Appareil d'essai de déformation de cellules pouch selon la revendication 5, la partie réceptrice creuse (210) comprenant une pluralité de parties réceptrices creuses (210) espacées l'une de l'autre d'une certaine distance dans le sens de la largeur totale (Z) de la cellule pouch (S), et
la première barre de fixation (310) étant fixée à la pluralité des parties réceptrices creuses (210).

7. Appareil d'essai de déformation de cellules pouch selon la revendication 6, les parties réceptrices creuses (210) étant situées sur un bord inférieur, sur un bord supérieur, et entre le bord inférieur et le bord supérieur de la cellule pouch (S) dans le sens général de la largeur (Z) de la cellule pouch (S).

8. Appareil d'essai de déformation de cellules pouch selon la revendication 6, les parties réceptrices creuses (210) étant situées sur un bord latéral, sur un autre bord latéral, et entre l'un bord latéral et l'autre bord latéral de la cellule pouch (S) dans le sens général de la longueur (X).

9. Appareil d'essai de déformation de cellules pouch selon la revendication 1, l'élément de mesure (200) comprenant:
une partie réceptrice creuse (210), et
une deuxième partie de détection (260) reçue dans la partie réceptrice creuse (210),
la deuxième partie de détection (260) étant munie d'un deuxième capteur (261) configuré pour mesurer sans contact une distance jusqu'à la cellule pouch (S).

10. Procédé d'essai de déformation de cellules pouch comprenant :
une première étape de localisation d'une cellule poche (S) disposée verticalement ; et
une deuxième étape de détermination si la cellule pouch (S) est normale d'après une planéité de la cellule pouch (S) en utilisant un élément de mesure (200) situé sur une surface latérale de la cellule pouch (S),
l'élément de mesure (200) effectuant une mesure avec contact de la planéité de la cellule pouch (S), et
une pluralité d'éléments de mesure (200) étant agencés sur une surface latérale ou sur des surfaces latérales opposées de la cellule pouch (S), et
la déformation étant un phénomène de flexion, les éléments de mesure (200) comprenant chacun:
une partie réceptrice creuse (210),
une barre mobile (220) reçue dans la partie réceptrice creuse (210),
un crabot (230) monté sur la barre mobile (220),
un ressort (240) reçu dans la partie réceptrice creuse (210), un bout du ressort (240) étant fixé à la partie réceptrice creuse (210), un autre bout du ressort (240) étant connecté à un bout de la barre mobile (220), et
une première portion de détection (250) située à proximité de la partie réceptrice creuse (210),
à la deuxième étape, la partie réceptrice creuse (210) étant déplacée vers la surface latérale de la cellule pouch (S) jusqu'à ce que la partie réceptrice creuse (210) atteigne une position définie, dans un état où la partie de réception creuse (210) est située perpendiculairement à la surface latérale de la cellule pouch (S), et
la première partie de détection détectant le crabot pour établir si la cellule pouch a été déformée.

11. Procédé d'essai de déformation de cellules pouch selon la revendication 10, la partie réceptrice creuse (210) possédant une fenêtre d'observation (211),
dans lequel, lorsque le crabot (230) est exposé à l'extérieur à travers la fenêtre d'observation (211), et la première partie de détection (250) détecte le crabot (230), le cellule pouch (S) est considérée comme étant normale, et lorsque la première partie de détection (250) ne détecte pas le crabot (230), la cellule pouch (S) considérée comme étant anormale.

12. Procédé d'essai de déformation de cellules pouch selon la revendication 10, dans lequel, à la deuxième étape, une pluralité de parties réceptrices creuses (210) espacées l'une de l'autre par une certaine distance sur une longueur globale (L) de la cellule pouch (S) sont déplacées vers l'une surface latérale ou les surfaces latérales opposées de la cellule pouch (S).

13. Procédé d'essai de déformation de cellules pouch selon la revendication 10, dans lequel, à la deuxième étape, une pluralité de parties réceptrices creuses (210) espacées l'une de l'autre par une certaine distance le long d'une largeur générale (W) de la cellule pouch (S) sont déplacées vers l'une surface latérale ou les surfaces latérales opposées de la cellule pouch (S).

14. Procédé d'essai de déformation de cellules pouch selon la revendication 11, dans lequel, lorsque le crabot (230) n'est pas détecté à la deuxième étape, une alarme est déclenchée.
